# EUROPEAN PATENT APPLICATION

(11) **EP 4 451 398 A1**
(43) Date of publication of application: **23.10.2024**
(21) Application number: 24157490.4
(22) Date of filing: 14.02.2024
(51) Int. Cl.: H01M 10/04, H01M 50/105, H01M 50/119, H01M 50/122, H01M 50/126, H01M 50/131, H01M 50/133, H01M 50/141, B32B 15/08, B32B 15/20, B32B 27/32, B32B 27/34, B32B 15/09

(54) **PACKAGING FILM FOR SECONDARY BATTERY, SECONDARY BATTERY, METHOD FOR PREPARING SECONDARY BATTERY, AND ELECTRONIC DEVICE**

(30) Priority: 21.02.2023 CN 202310145518
(71) Applicant: Ningde Amperex Technology Ltd., Ningde City, Fujian 352100 (CN)
(72) Inventor: WU, Jian, Ningde City, Fujian 352100 (CN)
(74) Representative: Icosa

(57) **Abstract**

A packaging film for a secondary battery, a secondary battery, a method for preparing the secondary battery, and an electronic device. The packaging film for the secondary battery includes a heat sealing layer (1), a metal layer (2), a protective layer (4) and a hydrophobic layer (5) stacked sequentially. The water contact angle of the hydrophobic layer (5) is more than or equal to 130°. The water roll-off angle of the hydrophobic layer (5) is less than or equal to 10°. The packaging film for the secondary battery can improve the encapsulation reliability of the secondary battery. The secondary battery has good safety, stability and appearance.

## Description

### TECHNICAL FIELD

This application relates to the technical field of battery packaging, in particular to a packaging film for a secondary battery, a secondary battery, a method for preparing the secondary battery, and an electronic device.

### BACKGROUND

The packaging of secondary batteries is an important part of the battery production process. The selection of packaging films will significantly influence the reliability of heat sealing encapsulation of secondary batteries. A packaging film generally includes a heat sealing layer, a metal layer and a protective layer. However, in actual production, due to long material stagnation time and abnormal environmental temperature and humidity control, the surface of the packaging film or sealing head may absorb water, which may cause damage to the protective layer, thus reducing the encapsulation reliability of the secondary battery.

### SUMMARY

This application provides a packaging film for a secondary battery, a secondary battery, a method for preparing the secondary battery, and an electronic device. The packaging film for the secondary battery can improve the encapsulation reliability of the secondary battery.

In a first aspect, this application provides a packaging film for a secondary battery, including a heat sealing layer, a metal layer, a protective layer and a hydrophobic layer stacked sequentially, the water contact angle of the hydrophobic layer being more than or equal to 130°, the water roll-off angle of the hydrophobic layer being less than or equal to 10°.

In this application, a hydrophobic layer is provided on the surface of the protective layer of the packaging film. The hydrophobic layer has a large water contact angle, which can effectively prevent water from entering the protective layer inside. At the same time, the hydrophobic layer also has a small water roll-off angle, which means that water is not easy to adhere to the surface of the hydrophobic layer, thus further reducing the infiltration of water into the protective layer, significantly reducing the water content in the protective layer, ensuring the stability of the protective layer during high-temperature encapsulation and improving the encapsulation reliability of the secondary battery.

In some examples of this application, the water contact angle of the hydrophobic layer is 130°-165°.

In some examples of this application, the water contact angle of the hydrophobic layer is 140°-165°.

In some examples of this application, the water roll-off angle of the hydrophobic layer is 5°-10°.

In some examples of this application, the hydrophobic layer includes inorganic nanoparticles and a fluoropolymer, the mass content of the inorganic nanoparticles is 32%-38%, the mass content of the fluoropolymer is 6%-20%, and the particle size Dv50 of the inorganic nanoparticles is 100nm to 200nm.

In some examples of this application, the inorganic nanoparticles include at least one of silicon dioxide, aluminum trioxide and titanium dioxide; the fluoropolymer includes at least one of polytetrafluoroethylene, polytrifluorochloroethylene, polyvinylidene fluoride, ethylene-tetrafluoroethylene copolymer and fluoropolyacrylate.

In some examples of this application, the thickness of the hydrophobic layer is 2µm-5µm.

In some examples of this application, the packaging film for the secondary battery satisfies at least one of the following conditions: the heat sealing layer includes polyolefin; the metal layer is an aluminum foil or a steel foil; the protective layer includes polyamide or polyethylene terephthalate.

In a second aspect, this application provides a secondary battery, including an electrode assembly and a packaging bag, the electrode assembly being accommodated in the packaging bag, the packaging bag being formed by the packaging film in any example in the first aspect through encapsulation;

the packaging bag including a sealing portion, the hydrophobic layer being an outer surface of the sealing portion.

In a third aspect, this application provides a method for preparing a secondary battery, including the following steps:
S 10: obtaining an electrode assembly;
S20: obtaining a packaging film, the packaging film including a heat sealing layer, a metal layer, a protective layer and a hydrophobic layer stacked sequentially, the hydrophobic layer covering the protective layer, the water contact angle of the hydrophobic layer being 130°-165°; and
S30: performing heat sealing encapsulation on the electrode assembly by using the packaging film.

This application further provides a method for preparing a secondary battery, including the following steps:
S10: obtaining an electrode assembly;
S20: obtaining a packaging film, the packaging film including a heat sealing layer, a metal layer and a protective layer stacked sequentially, a heat sealing portion of the packaging film being coated with a hydrophobic layer, the hydrophobic layer being located on a surface of the protective layer, the water contact angle of the hydrophobic layer being 130°-165°; and
S30: performing heat sealing encapsulation on the electrode assembly by using the packaging film, the heat sealing portion forming a sealing portion.

In a fourth aspect, this application provides an electronic device, including the secondary battery in any example in the second aspect, or the secondary battery prepared by adopting the method in any example in the third aspect.

### BRIEF DESCRIPTION OF DRAWINGS

In order to describe the technical solutions in the examples of this application more clearly, the drawings required in the examples of this application will be briefly introduced below.
FIG. 1 illustrates a structural schematic diagram of a packaging film for a secondary battery according to an example of this application.
FIG. 2 illustrates an external schematic diagram of a secondary battery according to an example of this application.

1-heat sealing layer, 2-metal layer, 3-adhesive layer, 4-protective layer, 5-hydrophobic layer

### DETAILED DESCRIPTION OF EMBODIMENTS

In order to make the purposes, technical solutions, and advantages of the examples of this application clearer, the technical solutions in the examples of this application will be clearly described below with reference to the drawings in the examples of this application. Obviously, the described examples are a part of the examples of this application, not all of them.

Unless otherwise defined, all technical and scientific terms used in this application have the same meanings as those commonly understood by technical personnel belonging to the technical field of this application. The terms used in this application are only for the purpose of describing specific examples and are not intended to limit this application. The terms "including" and "having" in the description and claims of this application, as well as the drawings, and any variations thereof, are intended to cover non-exclusive inclusion. The terms "first", "second" and the like in the description and claims of this application or the drawings are used for distinguishing different objects, instead of describing specific sequences or primary and secondary relationships.

The "example" mentioned in this application means that specific features, structures or characteristics described in conjunction with the example may be included in at least one example of this application. This word appearing at various positions in the description does not necessarily refer to the same example, nor is it an independent or alternative example that is mutually exclusive with other examples.

In the description of this application, it should be noted that unless otherwise specified and limited, the terms "mounted", "connected", "connecting", and "attached" should be understood in a broad sense. For example, it may be fixed connection, detachable connection, or integrated connection; it may be direct connection, indirect connection through an intermediate medium, or internal communication between two components. For those skilled in the art, the specific meanings of the above terms in this application can be understood based on specific circumstances.

The term "and/or" in this application is only a description of the association relationship of the associated objects, indicating that there may be three types of relationships. For example, A and/or B may indicate the existence of A alone, the existence of A and B simultaneously, and the existence of B alone. In addition, the character "/" in this application generally indicates that the associated objects are in an "or" relationship.

In the examples of this application, the same reference sign represents the same component. In addition, for simplicity, the detailed description of the same component is omitted in different examples. It should be understood that the thickness, length, width, and other dimensions of various components in the examples of this application illustrated in the drawings, as well as the overall thickness, length, width, and other dimensions of the integrated device, are only exemplary and should not constitute any limitations on this application.

At present, in the technical field of secondary battery encapsulation, a widely used packaging film includes a heat sealing layer, a metal layer, and a protective layer. The heat sealing layer is fused in the encapsulation process under the joint effect of certain temperature, pressure and time, thus completing the encapsulation of the battery. The metal layer provides certain strength for the battery, thus preventing the battery from being damaged by external forces and preventing the infiltration of water. At the same time, in order to protect the metal layer from scratches and ensure continuous operation during the processing without damaging the appearance, a protective layer is provided outside the metal layer. The existing materials of the protective layer are mainly hydrophilic polymer materials with good impact resistance, puncture resistance and heat resistance, which easily absorb water in the environment. Therefore, the water in the protective layer may cause the covalent bond of the polymer to break in the high-temperature encapsulation process, which will damage the original structure of the protective layer, deteriorate the performance, and reduce the encapsulation reliability of the secondary battery.

Aiming at the above problem, there are currently four common solutions in the production and manufacturing process. Solution 1 is to add a protective cover to the encapsulation machine, adopt a partially enclosed design for the encapsulation station, and blow in a small amount of drying air to isolate the impact of water vapor on the sealing head and encapsulation process, solution 2 is to bake the packaging film at high temperature for a long time to reduce the water content of the packaging film and reduce the erosion of water on the protective layer. Solution 3 is to strictly control the temperature and humidity in the packaging film storage and encapsulation processes, monitor the water content of incoming materials and production processes, and reduce the adverse impact of water during the packaging film storage and transfer processes. Solution 4 is to reduce the encapsulation temperature and extend the encapsulation time to reduce the damage of water to the protective layer at high temperature.

However, the above methods also have their own problems. Solution 1 will make the encapsulation equipment bulkier, and increase the difficulty of production and equipment maintenance. At the same time, it is difficult for a small amount of drying air to effectively reduce the water introduced by the packaging film before encapsulation. Solution 2 not only increases the energy consumption and time cost of production, but also cannot solve the risk of introducing water by the encapsulation equipment. In addition, the toughness of the packaging film after baking is reduced, which is prone to problems such as encapsulated side misalignment and poor corner positioning. Solution 3 will increase production investment in equipment, manpower, and warehouse. Solution 4 has a narrow use window, requires the use of special electrode tab sealant, and also has a potential risk of poor encapsulation parallelism and reduced tension.

To sum up, the current solutions cannot fully solve the problem of damage to the protective layer caused by the introduction of water at a lower cost, resulting in poor safety and reliability performance of the battery.

In view of this, this application provides a packaging film for a secondary battery, a secondary battery, a method for preparing the secondary battery, and an electronic device. The packaging film for the secondary battery can improve the encapsulation reliability of the battery.

### Packaging film for secondary battery

In a first aspect, this application provides a packaging film for a secondary battery, which includes a heat sealing layer, a metal layer, a protective layer and a hydrophobic layer stacked sequentially. The water contact angle of the hydrophobic layer is more than or equal to 130°. The water roll-off angle of the hydrophobic layer is less than or equal to 10°.

In this application, the packaging film for the secondary battery includes a heat sealing layer, a metal layer, a protective layer and a hydrophobic layer stacked sequentially. The functions of the heat sealing layer, the metal layer and the protective layer are similar to those of the corresponding structures in commonly used packaging films, which will not be repeated here. In order to reduce the damage to the protective layer caused by water introduction during encapsulation, it is necessary to reduce the water absorption rate of the protective layer. Therefore, the inventor provides a hydrophobic layer on the surface of the protective layer of the packaging film. Generally speaking, the larger the water contact angle of the hydrophobic layer, the better the hydrophobic effect, the worse the wetting effect of water on the hydrophobic layer, and the higher the sphericity of water on its surface, thus significantly reducing the contact area between water and the hydrophobic layer, and effectively preventing water in the environment from entering the protective layer inside. Therefore, it is necessary to increase the contact angle of the hydrophobic layer to achieve a better effect.

In addition, as found by the inventor, in the actual production process, if the packaging film is stored for a long time under high ambient humidity, the water in the environment will accumulate on the surface of the hydrophobic layer. In this process, the water on the surface of the hydrophobic layer will infiltrate into the protective layer inside, thus increasing the water absorption of the protective layer. For this, in addition to a larger water contact angle, the hydrophobic layer also needs to reduce its water roll-off angle. The smaller the water roll-off angle of the hydrophobic layer, the easier it is for water droplets on the surface of the hydrophobic layer to slip off, and the stronger the self-cleaning ability of the hydrophobic layer, thus effectively inhibiting the accumulation of water on the surface of the hydrophobic layer, reducing the infiltration of water into the protective layer and reducing the water absorption rate of the protective layer.

As found by the inventor through extensive experiments, in a case that the hydrophobic layer simultaneously satisfies the following conditions: the water roll-off angle is more than or equal to 130° and the water roll-off angle less than or equal to 10°, it can significantly reduce the water content in the protective layer, ensure the stability of the protective layer during high-temperature encapsulation, and thus improve the encapsulation reliability of the battery.

It should be noted that in this application, the water contact angle and water roll-off angle have well-known meanings in the art. The water contact angle of the hydrophobic layer refers to the contact angle of water droplets on the surface of the hydrophobic layer, which can be determined according to known methods and instruments. The water roll-off angle of the hydrophobic layer refers to the critical angle formed between the inclined surface and the horizontal plane when water droplets happen to roll on the inclined surface of the hydrophobic layer, which can be determined according to known methods and instruments. For example, an optical contact angle and roll-off angle measuring instrument (OSA60, Ningbo New Boundary Science Instrument Co., Ltd.) is used to measure the water contact angle and the water roll-off angle, by referring to the sessile drop method and the tilt method in GB/T 30447-2013 Nanofilm Contact Angle Measurement Method.

In some examples, the water contact angle of the hydrophobic layer is 130°-165°. For example, the water contact angle of the hydrophobic layer may be 130°, 135°, 140°, 145°, 150°, 152°, 154°, 156°, 158°, 160°, 165° or within a range composed of any of the above numerical values.

In some examples above, the water contact angle of the hydrophobic layer may be 130°-165°. Generally speaking, the larger the water contact angle of the hydrophobic layer, the stronger its hydrophobicity, and the smaller the contact area with water, so that the lower the water content of the protective layer, and the more stable the protective layer is in the encapsulation process. However, in a case that the water contact angle is larger, it is required to use materials with lower surface energy and more complex processes. As a result, the cost of providing a hydrophobic layer is higher, which is not conducive to practical large-scale production application. Moreover, as found by the inventor, in a case that the water contact angle reaches 165°, the packaging film can already solve the encapsulation problem very well. Therefore, controlling the water contact angle of the hydrophobic layer within the range of 130°-165° can improve the stability of the protective layer during high-temperature encapsulation and reduce the production cost at the same time.

In some examples, the water contact angle of the hydrophobic layer may also be 140°-165°.

In some examples above, the lower limit of the water contact angle of the hydrophobic layer is further limited to 140°. As mentioned above, the larger the water contact angle of the hydrophobic layer, the stronger its hydrophobicity, and the smaller the contact area with water, so that the lower the water content of the protective layer, the more stable the protective layer is in the encapsulation process. At the same time, increasing the water contact angle of the hydrophobic layer from 130° to 140° does not significantly increase the production cost. Therefore, the water contact angle of the hydrophobic layer may be controlled within the range of 140°-165°.

In some examples, the water roll-off angle of the hydrophobic layer is 5°-10°. For example, the water roll-off angle of the hydrophobic layer may be 5°, 6°, 7°, 8°, 9°, 10°, or within a range composed of any of the above numerical values.

In some examples above, since the smaller the water roll-off angle of the hydrophobic layer, the easier it is for water droplets on the surface of the hydrophobic layer to slip off, and the stronger the self-cleaning ability of the hydrophobic layer, thus effectively inhibiting the accumulation of water on the surface of the hydrophobic layer and reducing the infiltration of water into the protective layer. Therefore, the smaller the water roll-off angle, the more conducive it is to the stability of the protective layer in high-temperature encapsulation process. Similarly, further reducing the water roll-off angle of the hydrophobic layer will significantly increase the technical difficulty and cost. At the same time, in a case that the water contact angle of the hydrophobic layer is more than 130° and the water roll-off angle is reduced to 5°, the packaging film can already solve the encapsulation problem very well. Therefore, limited by technology and production cost, the water roll-off angle of the hydrophobic layer may be controlled within a range of 5°-10°.

In some examples, the hydrophobic layer includes inorganic nanoparticles and a fluoropolymer, the mass content of the inorganic nanoparticles is 32%-38%, the mass content of the fluoropolymer is 6%-20%, and the particle size Dv50 of the inorganic nanoparticles is 100nm-200nm.

In some examples above, the inorganic nanoparticles and the fluoropolymer can ensure that the hydrophobic layer has a large water contact angle and water roll-off angle. The fluoropolymer is a material with low surface energy, which has good hydrophobicity and can ensure that the hydrophobic layer has a large water contact angle. The inorganic nanoparticles can form micro-nano composite structures on the surface of the hydrophobic layer, thus further improving the water contact angle of the hydrophobic layer and significantly reducing its water roll-off angle at the same time.

It is worth mentioning that although the hydrophobic layer on the surface of the protective layer can effectively reduce the water content of the protective layer, the water content in the protective layer cannot be avoided in the production process of the packaging film before the hydrophobic coating layer is provided on the surface of the protective layer. At the same time, the water vapor in the environment increases the water content of the protective layer through capillary action or other ways when it is stored in a high-humidity environment for a long time. In a case that a conventional hydrophobic coating layer is used, there is not enough space for water vapor expansion and heat diffusion in the protective layer in the heat sealing process, which may cause serious damage to the protective layer.

In some examples above, the hydrophobic layer containing the inorganic nanoparticles has a relatively rough surface, and the gaps between different protrusions on the hydrophobic layer can provide escape channels for water vapor and heat in the heat sealing process, thus reducing the influence of water in the protective layer on the stability of the protective layer and improving the encapsulation reliability of the battery.

The mass content of the inorganic nanoparticles in the hydrophobic layer may be 32%-38%. For example, the mass content of the inorganic nanoparticles may be 32%, 32.5%, 33%, 33.5%, 34%, 34.5%, 35%, 35.5%, 36%, 36.5%, 37%, 37.5%, 38%, or within a range composed of any of the above numerical values. The higher the mass content of the inorganic nanoparticles, the more micro-nano structures on the surface of the hydrophobic layer, and the smaller its roll-off angle. However, relatively speaking, the channels for water vapor and heat to diffuse are reduced. At the same time, excessive inorganic nanoparticles may also lead to too high viscosity of the hydrophobic coating, resulting in uneven coating spraying and adverse influence. Moreover, too high mass content of the inorganic nanoparticles may also deteriorate the wear resistance of the hydrophobic layer, which is easy to fall off in the pit punching process. Therefore, the mass content of the inorganic nanoparticles in the hydrophobic layer may be controlled within a range of 32%-38%.

The particle size Dv50 of the inorganic nanoparticles is 100nm-200nm. The particle size Dv50 of the inorganic nanoparticles may be 100nm-200nm. For example, the particle size Dv50 of the inorganic nanoparticles may be 100nm, 105nm, 110nm, 115nm, 120nm, 125nm, 130nm, 135nm, 140nm, 145nm, 150nm, 155nm, 160nm, 165nm, 170nm, 175nm, 180nm, 185nm, 190nm, 195nm, 200nm or within a range composed of any of the above numerical values. In a case that the particle size of the inorganic nanoparticles is too small, it will make them difficult to disperse in the hydrophobic coating, and the cost will increase significantly. In a case that the particle size of the inorganic nanoparticles is too large, it will reduce the surface roughness and wear resistance of the hydrophobic layer, easily cause falling-off in the pit punching process and also influence the hydrophobic effect. Therefore, the particle size Dv50 of the inorganic nanoparticles may be controlled within a range of 100nm-200nm.

It should be noted that in this application, the particle size Dv50 of the inorganic nanoparticles has a meaning known in the art. Dv50 means that the particle size of 50% of the inorganic nanoparticles is smaller than a value in the volume-based particle size distribution. The particle size Dv50 of the inorganic nanoparticles may be determined by methods and instruments known in the art. For example, it may be determined through a laser particle size analyzer (for example, UK Malvern Mastersizer 2000E) by referring to GB/T 19077-2016 Particle Size Distribution Laser Diffraction Method.

The mass content of the fluoropolymer in the hydrophobic layer may be 6%-20%. For example, the mass content of the fluoropolymer may be 6%, 7%, 8%, 9%, 10%, 11%, 12%, 13%, 14%, 15%, 16%, 17%, 18%, 19%, 20%, or within a range composed of any of the above numerical values. The fluoropolymer has very low surface energy. Within a certain range, the higher the content of the fluoropolymer in the hydrophobic layer, the larger the contact angle. Beyond the above range, increasing the content of the fluoropolymer has little influence on the contact angle, and the cost of the fluoropolymer is high. In a case that the mass content of the fluoropolymer is less than 6%, it will make the contact angle of the hydrophobic layer unable to satisfy the requirements. Overall, the mass content of the fluoropolymer in the hydrophobic layer may be controlled within a range of 6%-20%.

In some examples, the hydrophobic layer further includes an adhesive.

In some examples above, the main function of the adhesive is to enable the inorganic nanoparticles and the fluoropolymer to stably bind to the surface of the protective layer, thus preventing the hydrophobic layer on the surface of the packaging film from falling off, and preventing the protective layer from absorbing water from the environment. The adhesive may be an adhesive commonly used in the art, the specific type of which is not specially limited. For example, the adhesive may include at least one of epoxy resin, polyurethane and acrylic resin.

In some examples, the inorganic nanoparticles include at least one of silicon dioxide, aluminum trioxide and titanium dioxide; the fluoropolymer includes at least one of polytetrafluoroethylene, polytrifluorochloroethylene, polyvinylidene fluoride, ethylene-tetrafluoroethylene copolymer and fluoropolyacrylate.

In some examples above, the specific types of the inorganic nanoparticles and the fluoropolymer commonly used in the art are listed, and those skilled in the art may select according to the actual needs. It is worth mentioning that the inorganic nanoparticles not only have lower surface energy, which is beneficial for improving the water contact angle and reducing the water roll-off angle, but also have certain rigidity, which can not only prevent the micro-nano structures on the surface of the hydrophobic layer from being damaged and making the hydrophobic effect become poor, but also improve the wear resistance of the packaging film.

In some examples, the thickness of the hydrophobic layer is 2µm-5µm. For example, the thickness of the hydrophobic layer may be 2µm. 2.5µm. 3µm. 3.5µm. 4µm. 4.5µm. 5µm or within a range composed of any of the above numerical values.

In some examples above, in a case that the thickness of the hydrophobic layer is too small, the water in the environment is more likely to infiltrate into the protective layer inside. At the same time, the too thin hydrophobic layer is easily damaged in the pit punching process, thus influencing the hydrophobic effect of the hydrophobic layer. In a case that the thickness of the hydrophobic layer is too large, it will increase the production cost and make it difficult to control the flatness of the packaging film. In the heat sealing process, the water vapor and heat in the protective layer cannot escape easily, thus damaging the protective layer. Therefore, the thickness of the hydrophobic layer may be controlled to be within a range of 2µm-5µm.

In some examples of this application, the packaging film for the secondary battery satisfies at least one of the following conditions: the heat sealing layer includes polyolefin; the metal layer is an aluminum foil or a steel foil; the protective layer includes polyamide or polyethylene terephthalate.

In some examples above, the heat sealing layer may include polyolefin, the specific type of which is not specially limited. Those skilled in the art may select according to the actual needs. As an example, the polyolefin may be polypropylene (PP).

The metal layer may be an aluminum foil or a steel foil. Since the aluminum foil or the steel foil has good ductility and strength and low density and cost, those skilled in the art may select according to the actual needs. As an example, the metal layer may be an aluminum foil.

The protective layer may include polyamide or polyethylene terephthalate. Polyamide (i.e., nylon) or polyethylene terephthalate has good impact resistance, puncture resistance and heat resistance, and can be used as the protective layer of the packaging film. As an example, the protective layer may be polyamide. Polyamide as the protective layer can enable the packaging film to have better pit punching depth and lower cost. Although polyamide is prone to hydrolysis under high-temperature water vapor, leading to problems such as crystallinity decrease, burns and blackening, the stability of polyamide in the heat sealing process can be significantly improved under the action of the hydrophobic layer.

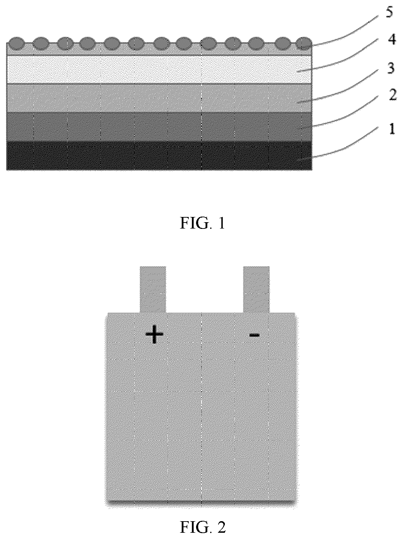

It can be understood that the packaging film may further include other functional layers. For example, it may further include an adhesive layer between the protective layer and the metal layer, to ensure stable adhesion between the protective layer and the metal layer and prevent it from falling off. The specific type of the adhesive layer may be selected by those skilled in the art according to the actual needs. As an example, the specific structural schematic diagram of the packaging film is as illustrated in FIG. 1, which includes a heat sealing layer 1, a metal layer 2, an adhesive layer 3, a protective layer 4 and a hydrophobic layer 5 stacked sequentially.

### Method for preparing packaging film for secondary battery

This application further provides a method for preparing a packaging film for a secondary battery, which includes the following steps:
obtaining a packaging base film, the packaging base film including a heat sealing layer, a metal layer and a protective layer stacked sequentially;
preparing an adhesive layer on the surface of the protective layer of the packaging base film by using an adhesive; and
preparing a hydrophobic surface layer on the surface of the adhesive layer by using a hydrophobic coating, the adhesive layer and the hydrophobic surface layer jointly forming a hydrophobic layer with a water contact angle of 130°-165°, to obtain a packaging film for a secondary battery.

In this application, the specific types of the heat sealing layer, the metal layer and the protective layer may be selected by referring to any example in the first aspect, which will not be repeated here. The types of the adhesive and the hydrophobic coating and the methods for using them are not further limited. They may be applied on a target surface through coating, spraying and other methods, and cured under appropriate conditions. The adhesive may be selected by referring to any example in the first aspect.

In some examples, the water roll-off angle of the hydrophobic layer is 5°-10°.

In some examples, the hydrophobic coating may be obtained by dispersing the inorganic nanoparticles and the fluoropolymer in the hydrophobic layer into an organic solvent according to the mass ratio in the example in the first aspect.

In some examples, the organic solvent may include at least one of ethanol, methanol, cyclohexane and acetone.

In some examples, the solid content in the hydrophobic coating may be 50%-70%. At this point, the hydrophobic coating is easy to disperse and has a moderate viscosity, making it suitable for spraying and making the hydrophobic surface layer be uniformly distributed on the adhesive layer.

As an example, a method for constructing a hydrophobic layer on a packaging base film includes the following steps: dissolving and dispersing inorganic nanoparticles and a fluoropolymer in a solvent to obtain a hydrophobic coating for future use, firstly preparing an adhesive layer on a packaging base film, then spraying the hydrophobic coating onto the adhesive layer, and performing high-temperature curing to obtain a hydrophobic surface layer, the adhesive layer and the hydrophobic surface layer jointly forming a hydrophobic layer on the packaging base film to obtain a packaging film for a secondary battery.

### Secondary battery

In a second aspect, this application provides a secondary battery, which includes an electrode assembly and a packaging bag. The electrode assembly is accommodated in the packaging bag. The packaging bag is formed by the packaging film in any example in the first aspect through encapsulation.

The packaging bag includes a sealing portion. The hydrophobic layer is an outer surface of the sealing portion.

In this application, the packaging bag obtained from the packaging film in any example in the first aspect through encapsulation can ensure that the protective layer is not damaged in the heat sealing encapsulation process, and the secondary battery obtained has good safety, stability and appearance. The external schematic diagram of the secondary battery obtained is as illustrated in FIG. 2.

It should be noted that the type and shape of the electrode assembly are not limited in this application, and those skilled in the art may select according to the actual needs. For example, the electrode assembly may be obtained by winding or laminating the positive and negative electrode plates and the separator.

### Method for preparing secondary battery

In a third aspect, this application provides a method for preparing a secondary battery, which includes the following steps:
S 10: obtaining an electrode assembly;
S20: obtaining a packaging film, the packaging film including a heat sealing layer, a metal layer, a protective layer and a hydrophobic layer stacked sequentially, the hydrophobic layer covering the protective layer, the water contact angle of the hydrophobic layer being 130°-165°; and
S30: performing heat sealing encapsulation on the electrode assembly by using the packaging film.

In this application, a packaging film with a hydrophobic layer is used for performing heat sealing encapsulation on the electrode assembly, which can prevent the influence of water vapor on the protective layer in the heat sealing process. The obtained secondary battery has good safety, stability and appearance.

Similarly, the packaging film may be selected by referring to the packaging film in any example in the first aspect.

This application further provides a method for preparing a secondary battery, which includes the following steps:
S10: obtaining an electrode assembly;
S20: obtaining a packaging film, the packaging film including a heat sealing layer, a metal layer and a protective layer stacked sequentially, a heat sealing portion of the packaging film being coated with a hydrophobic layer, the hydrophobic layer being located on a surface of the protective layer, the water contact angle of the hydrophobic layer being 130°-165°; and
S30: performing heat sealing encapsulation on the electrode assembly by using the packaging film, the heat sealing portion forming a sealing portion.

In this application, since the heat pressing head only performs heat pressing on the heat sealing portion of the packaging film in the heat sealing process, a hydrophobic layer can be coated only on the surface of the heat sealing portion of the packaging film, which can also prevent the influence of water vapor on the protective layer in the heat sealing process and reduce the production cost of the packaging film.

### Electronic device

In a fourth aspect, this application provides an electronic device, which includes the secondary battery in any example in the second aspect or the secondary battery prepared by adopting the method in any example in the third aspect.

The electronic device is not specially limited in this application, which may be any electronic device known in the existing technology. In some examples, the electronic device may include, but not limited to, laptop computers, stylus input computers, mobile computers, e-book players, portable phones, portable fax machines, portable copiers, portable printers, head-mounted stereo earphones, video recorders, LCD TVs, portable cleaners, portable CD layers, mini CD layers, transceivers, electronic notepads, calculators, memory cards, portable audio recorders, radio sets, backup power supplies, motors, cars, motorcycles, power bicycles, bicycles, lighting fixtures, toys, game consoles, clocks, electric tools, flash lights, cameras, large household batteries, and lithium-ion capacitors.

The examples of this application will be described below. The examples described below are exemplary and are only intended to explain this application, and cannot be understood as limitations on this application. If the specific technologies or conditions are not specified in the examples, the technologies or conditions described in the literature in the art or the product manual shall be followed. The reagents or instruments used without specifying the manufacturer are all conventional products that can be obtained through market procurement.

Conventional aluminum-plastic film: provided with a PP layer, an aluminum layer, an adhesive layer and a nylon layer stacked sequentially, purchased from Zijiang New Materials Technology Co., Ltd.

Test of water contact angle and water roll-off angle: an optical contact angle and roll-off angle measuring instrument (OSA60, Ningbo New Boundary Science Instrument Co., Ltd.) is used to measure the water contact angle and the water roll-off angle, by referring to the sessile drop method and the tilt method in GB/T 30447-2013 Nanofilm Contact Angle Measurement Method.

### Example 1

### Preparation of packaging film for secondary battery

Hydrophobic coating: Al₂O₃ with a particle size Dv50 of 100nm and polytetrafluoroethylene were added to and fully mixed with cyclohexane to obtain a hydrophobic coating. The solid content was 50%. The mass ratio of Al₂O₃ to polytetrafluoroethylene was 85:15.371861

Epoxy resin was coated to a surface of a nylon layer of a conventional aluminum-plastic film. Precuring was performed at 80° C for 1h to obtain an adhesive layer. Then, a hydrophobic coating was sprayed onto the adhesive layer. Curing was performed at 120° C for 1h to obtain a hydrophobic surface layer. The adhesive layer and the hydrophobic surface layer jointly formed a hydrophobic layer to obtain a packaging film for a secondary battery. The mass contents of epoxy resin, Al₂O₃ and polytetrafluoroethylene in the hydrophobic layer were 60%, 34% and 6%, respectively. The thickness of the hydrophobic layer is 5µm.

The water contact angle and the water roll-off angle of the hydrophobic layer on the packaging film for the secondary battery were tested. The results were as shown in Table 1.

The packaging film for the secondary battery was stored in a 25 ± 3° C 60% environment for 24h. Then, an electrode assembly was encapsulated at 210° C to obtain a secondary battery. A CCD appearance inspection machine was used to inspect the appearance and parallelism of the surface of the secondary battery. The results were as shown in Table 1.

### Examples 2-13 and Comparative Examples 2-4

Preparation of packaging film for secondary battery: similar to those in Example 1, except that the type, size, content and thickness of the inorganic nanoparticles in the hydrophobic layer, and the content and thickness of polytetrafluoroethylene were different. For specific parameters, see Table 1.

The water contact angle and the water roll-off angle of the hydrophobic layer on the packaging film for the secondary battery were tested. The results were as shown in Table 1.

The packaging film for the secondary battery was stored in a 25 ± 3° C 60% environment for 24h. Then, an electrode assembly was encapsulated at 210° C to obtain a secondary battery. A CCD appearance inspection machine was used to inspect the appearance and parallelism of the surface of the secondary battery. The results were as shown in Table 1.

### Comparative Example 1

A conventional aluminum-plastic film was directly used as a packaging film.

The water contact angle and the water roll-off angle of the nylon layer on the conventional aluminum-plastic film were tested. The results were as shown in Table 1.

The conventional aluminum-plastic film was stored in a 25±3° C 60% environment for 24h. Then, an electrode assembly was encapsulated at 210° C to obtain a secondary battery. A CCD appearance inspection machine was used to inspect the appearance and parallelism of the surface of the secondary battery. The results were as shown in Table 1.

**Table 1**

| Group | Hydrophobic layer | | | | | Test results | | | |
|---|---|---|---|---|---|---|---|---|---|
| | Inorganic nanoparticles | Mass content of inorganic nanoparticles/% | Mass content of polytetrafluoroethylene/% | Thickness of hydrophobic layer/µm | Dv50 of inorganic nanoparticles/nm | Water contact angle/° | Water roll-off angle/° | Parallelism | Encapsulation appearance |
| Comparative Example 1 | / | / | / | / | / | 70 | 30 | ok | Burn |
| Comparative Example 2 | SiO₂ | 39 | 1 | 5 | 100 | 125 | 13 | ok | Burn |
| Comparative Example 3 | SiO₂ | 39.5 | 0.5 | 5 | 100 | 121 | 9 | ok | Burn |
| Comparative Example 4 | SiO₂ | 30 | 10 | 5 | 100 | 156 | 13 | ok | Burn |
| Example 1 | Al₂O₃ | 34 | 6 | 5 | 100 | 130 | 9 | ok | No burn |
| Example 2 | TiO₂ | 34 | 6 | 5 | 100 | 135 | 7 | ok | No burn |
| Example 3 | SiO₂ | 34 | 6 | 5 | 100 | 130 | 8 | ok | No burn |
| Example 4 | SiO₂ | 32 | 8 | 5 | 100 | 140 | 6 | ok | No burn |
| Example 5 | SiO₂ | 34 | 10 | 5 | 100 | 150 | 7 | ok | No burn |
| Example 6 | SiO₂ | 34 | 15 | 5 | 100 | 165 | 6 | ok | No burn |
| Example 7 | SiO₂ | 34 | 20 | 5 | 100 | 170 | 6 | ok | No burn |
| Example 8 | SiO₂ | 34 | 6 | 7 | 100 | 130 | 6 | NG | No burn |
| Example 9 | SiO₂ | 34 | 6 | 2 | 100 | 131 | 7 | ok | No burn |
| Example 11 | SiO₂ | 34 | 6 | 5 | 200 | 132 | 8 | ok | No burn |
| Example 12 | SiO₂ | 34 | 6 | 5 | 150 | 135 | 9 | ok | No burn |
| Example 13 | SiO₂ | 34 | 6 | 5 | 50 | 136 | 5 | ok | No burn |

| | | | | | | | | | |
|---|---|---|---|---|---|---|---|---|---|
| Notes: the mass content of the epoxy resin in the hydrophobic layer is not shown in the table, and the total mass content of the inorganic nanoparticles, polytetrafluoroethylene and epoxy resin is 100%; "/" indicates that there is no such data; parallelism "ok" indicates that the fusion effect of the sealing area is good. The sealing area with good fusion effect presents clear and obvious parallel milky white boundaries, and the internal fusion of the sealing area is uniform; parallelism "NG" indicates that the sealing area is under-fused or over-fused, the under-fused sealing area will present bright aluminum, and the edge of the over-fused sealing area will present regular fusion objects; encapsulation appearance "burn" indicates that there are nylon wrinkling, damage, yellowing and blackening at the sealing position; encapsulation appearance "no burn" indicates that the appearance at the sealing position is normal. | | | | | | | | | |

From the results in Table 1, it can be seen that compared to Comparative Example 1 in which no hydrophobic layer is provided, preparing a hydrophobic layer on the surface of the packaging film can effectively improve the water contact angle and reduce the water roll-off angle on the surface of the packaging film; however, in Comparative Examples 2-4, since it cannot simultaneously satisfy the requirements that the water contact angle is more than or equal to 130° and the water roll-off angle is less than or equal to 10°, the packaging film cannot maintain a low water content in a humid environment, so burns occur in the encapsulation process; the water contact angle and the water roll-off angle of the hydrophobic layer obtained in each example can satisfy the requirements simultaneously, and no burns occur in the encapsulation process.

Comparing the results of Examples 1-3, it can be seen that using different types of inorganic nanoparticles has a certain influence on the water contact angle and the water roll-off angle of the hydrophobic layer, which may be related to the surface energy of the inorganic nanoparticles, the obtained water contact angles are all more than 130°, the water roll-off angles are all less than 10°, using titanium dioxide achieves the best effect, the water contact angle of 135° and the water roll-off angle of 7° achieve a good hydrophobic effect, the water content on the surface of the packaging film can be effectively reduced, and thus the nylon layer is prevented from being burned in the encapsulation process.

Comparing the results of Examples 3-7, it can be seen that the water contact angle of the hydrophobic layer can be adjusted by adjusting the mass content of polytetrafluoroethylene in the hydrophobic layer, but the influence on the water roll-off angle is not significant; as the mass content of polytetrafluoroethylene increases, the water contact angle of the hydrophobic layer increases, but it will significantly increase the production cost.

Comparing the results of Examples 3, 8 and 9, it can be seen that the thickness of the hydrophobic layer has little influence on the water contact angle of the hydrophobic layer; however, since the encapsulation process is carried out by heat pressing, excessive thickness will influence the heat transfer effect of the heat sealing encapsulation equipment, the fusion effect of the polypropylene layer will be influenced, and the parallelism does not satisfy the requirement; a thin hydrophobic layer may not significantly influence its hydrophobic effect, but it is more prone to wear.

Comparing the results of Examples 3 and 11-13, it can be seen that the particle size of the inorganic nanoparticles has a certain influence on the water roll-off angle and the water contact angle of the hydrophobic layer; in a case that the Dv50 of the inorganic nanoparticles is within the range of 50nm-200nm, the requirements can be satisfied; in a case that the Dv50 of the inorganic nanoparticles is less than 50nm, the production cost will be significantly increased.; based on the comprehensive consideration of the results, the Dv50 of the inorganic nanoparticles may be preferably in the range of 100nm to 200nm.

Accordingly, the packaging film provided in this application has a large water contact angle and a small roll-off angle, which can significantly reduce the water content in the protective layer, ensure the stability of the protective layer in the high-temperature encapsulation process, and thus improve the encapsulation reliability of the secondary battery.

Finally, it should be noted that the above examples are only used for describing the technical solution of this application, instead of limiting it. Although this application has been described in detail with reference to the examples, those skilled in the art should understand that they can still make modifications to the technical solution recorded in each example, or made equivalent replacements to some or all of the technical features. However, these modifications or replacements do not make the essence of the corresponding technical solution deviate from the scope of protection of this application.

## Claims

1. A packaging film for a secondary battery, **characterized in that** the packaging comprises a heat sealing layer (1), a metal layer (2), a protective layer (4) and a hydrophobic layer (5) stacked sequentially; the water contact angle of the hydrophobic layer (5) being more than or equal to 130°, the water roll-off angle of the hydrophobic layer (5) being less than or equal to 10°.

2. The packaging film for the secondary battery according to claim 1, **characterized in that** the water contact angle of the hydrophobic layer (5) is 130°-165°.

3. The packaging film for the secondary battery according to claim 1, **characterized in that** the water contact angle of the hydrophobic layer (5) is 140°-165°.

4. The packaging film for the secondary battery according to claim 1, **characterized in that** the water roll-off angle of the hydrophobic layer (5) is 5°-10°.

5. The packaging film for the secondary battery according to claim 1, **characterized in that** the hydrophobic layer (5) comprises inorganic nanoparticles and a fluoropolymer, a mass content of the inorganic nanoparticles in the hydrophobic layer (5) is 32%-38%, a mass content of the fluoropolymer in the hydrophobic layer (5) is 6%-20%, and the particle size Dv50 of the inorganic nanoparticles is 100nm to 200nm.

6. The packaging film for the secondary battery according to claim 5, **characterized in that** the inorganic nanoparticles comprise at least one of silicon dioxide, aluminum trioxide or titanium dioxide;
the fluoropolymer comprises at least one of polytetrafluoroethylene, polytrifluorochloroethylene, polyvinylidene fluoride, ethylene-tetrafluoroethylene copolymer or fluoropolyacrylate.

7. The packaging film for the secondary battery according to claim 5, **characterized in that** a thickness of the hydrophobic layer (5) is 2µm-5µm.

8. The packaging film for the secondary battery according to claim 1, **characterized in that** the packaging film for the secondary battery satisfies at least one of the following conditions:
the heat sealing layer (1) comprises polyolefin;
the metal layer (2) is an aluminum foil or a steel foil;
the protective layer (4) comprises polyamide or polyethylene terephthalate.

9. A secondary battery, **characterized in that** the secondary battery comprises an electrode assembly and a packaging bag, the electrode assembly being accommodated in the packaging bag, the packaging bag being formed by the packaging film according to any one of claims 1-8 through encapsulation;
the packaging bag comprising a sealing portion, the hydrophobic layer (5) being an outer surface of the sealing portion.

10. A method for preparing a secondary battery, **characterized in that** the following steps:
S 10: obtaining an electrode assembly;
S20: obtaining a packaging film, the packaging film comprising a heat sealing layer (1), a metal layer (2), a protective layer (4) and a hydrophobic layer (5) stacked sequentially, the hydrophobic layer (5) covering the protective layer (4), the water contact angle of the hydrophobic layer (5) being 130°-165°; and
S30: performing heat sealing encapsulation on the electrode assembly by using the packaging film.

11. A method for preparing a secondary battery, **characterized in that** the following steps:
S 10: obtaining an electrode assembly;
S20: obtaining a packaging film, the packaging film comprising a heat sealing layer (1), a metal layer (2) and a protective layer (4) stacked sequentially, a heat sealing portion of the packaging film being coated with a hydrophobic layer (5), the hydrophobic layer (5) being located on a surface of the protective layer (4), the water contact angle of the hydrophobic layer (5) being 130°-165°; and
S30: performing heat sealing encapsulation on the electrode assembly by using the packaging film, the heat sealing portion forming a sealing portion.

12. An electronic device, **characterized in that** the electronic device comprises the secondary battery according to claim 9, the battery prepared by adopting the method according to claim 10, or the secondary battery prepared by adopting the method according to claim 11.
